**Europäisches Patentamt**

**European Patent Office**

**Office européen des brevets**

(19)

(11) Numéro de publication: **0 165 883**

**A1**

(12) # DEMANDE DE BREVET EUROPEEN

(21) Numéro de dépôt: **85420094.6**

(22) Date de dépôt: **15.05.85**

(51) Int. Cl.⁴: **C 02 F 9/00**
**C 02 F 1/24**

(30) Priorité: **16.05.84 FR 8408090**

(43) Date de publication de la demande:
**27.12.85 Bulletin 85/52**

(84) Etats contractants désignés:
**AT BE CH DE GB IT LI LU NL SE**

(71) Demandeur: **Société Industrielle de Traitement des Eaux Polluées S.I.T.E.P.**
**71, rue Henri Bretonnet**
**F-78970 Mezieres-sur-Seine(FR)**

(72) Inventeur: **Simond, Jacques Adalbert**
**41, rue des Roussettes**
**F-78520 Limay(FR)**

(74) Mandataire: **Maureau, Philippe et al,**
**Cabinet Germain & Maureau Le Britannia - Tour C 20, bld Eugène Déruelle Boîte Postale 3011**
**F-69392 Lyon Cédex 03(FR)**

(54) Unité mobile d'épuration d'eaux et de boues polluées.

(57) Cette unité mobile d'épuration comprend, montés sur une remorque, d'amont en aval dans le sens de circulation de l'effluent à traiter : un dispositif de filtration (5), un dispositif de floculation (13), au moins un bac de flottation (18), un réservoir (24) de récupération des boues de flottation et un dispositif (35) de déshydratation des boues de flottation.

Application aux traitements d'eaux résiduaires industrielles.

FIG. 2

EP 0 165 883 A1

1

"UNITE MOBILE D'EPURATION D'EAUX ET DE BOUES POLLUEES"

La présente invention a pour objet une unité mobile d'épuration d'eau polluée, destinée notamment au traitement des eaux chargées de matières organiques et minérales en forte concentration.

Les eaux et boues polluantes (DBO5, DCO, métaux) constituées par eaux résiduaires industrielles, notamment, ne peuvent pas être rejetées dans le milieu naturel et doivent être placées en décharge. Or, dans une décharge dont le sol est étanche, il apparaît très vite des problèmes d'eau de percolation. Or, il n'existe actuellement aucune possibilité de traitement simple de ces lixiviats. Il serait, bien entendu, possible de construire des installations fixes sur chaque site de décharge ou pour chaque unité industrielle rejetant des eaux ou des boues polluées.

Toutefois, lorsque la quantité de ces eaux ou boues n'est pas très importante, la réalisation d'une unité industrielle ne se justifie par d'un point de vue financier.

La présente invention vise à remédier à ces inconvénients en fournissant une unité mobile d'épuration d'eau polluée.

La difficulté de la réalisation de l'unité selon l'invention résidait dans le fait de concevoir un appareil de dimensions compactes afin de pouvoir être installé sur une remorque satisfaisant les impératifs du gabarit routier, et qui soit suffisamment polyvalente, dans son utilisation, pour permettre le traitement de différents types de produits pollués, pour les amener à un état où ils peuvent être rejetés sans danger dans le milieu naturel.

A cet effet, l'unité qu'elle concerne comprend d'amont en aval dans le sens de circulation de l'effluent à traiter : un dispositif de filtration, un dispositif de floculation, au moins un bac de flottation, un réservoir de récupération des boues de flottation et un dispositif de déshydratation des boues de flottation.

Avant traitement de l'effluent, il est procédé à une analyse de celui-ci afin de déterminer quels sont les produits qui seront mis en oeuvre pour la floculation ainsi que les concentrations et les quantités nécessaires de ceux-ci.

Le dispositif de filtration comprend des premiers moyens pour retenir les particules solides d'un diamètre supérieur à 500 microns, et d'autres moyens pour réaliser un tamisage fin des eaux avec retenue des particules d'un diamètre supérieur à 150 microns.

Entre le dispositif de filtration et le dispositif de floculation sont disposées en parallèle une conduite de passage direct de l'effluent et une conduite comprenant un dispositif de séparation des graisses.

Grâce à la présence de vannes, l'une ou l'autre de ces conduites peut être choisie et ceci en fonction de la nature de l'effluent à traiter.

Selon une autre caractéristique de l'invention, le dispositif de floculation est du type à échangeurs tubulaires munis de venturis, et comprend trois compartiments destinés chacun à l'amenée d'un produit, chaque compartiment comprenant lui-même un réservoir de produit, un système de dilution, un agitateur, et une pompe doseuse réalisant l'injection du produit considéré dans le conduit de circulation de l'effluent.

En aval du dispositif de flottation est disposé un second bac de flottation dans lequel est amené l'effluent liquide en provenance du premier bac, en vue de la récupération des particules coagulées non récupérées dans le premier bac.

Si besoin est, il est procédé à une seconde floculation entre les deux bacs de flottation. Ce second bac est équipé d'une évacuation des boues vers le réservoir de récupération et d'une évacuation du liquide traité, après filtration.

Le dispositif de déshydratation des boues comprend une pompe amenant les boues prélevées dans le réservoir à une centrifugeuse, de laquelle les boues séchées sont extraites par une vis sans fin.

3

Chaque composant de l'unité d'épuration est agencé de façon à pouvoir être utilisé indépendamment des autres composants, ce qui permet d'assurer des traitements partiels en fonction de la qualité et de la quantité de l'effluent, et notamment d'effectuer soit :

- un prétraitement mécanique simple,
- un prétraitement mécanique amélioré,
- un traitement physico-chimique sur un étage,
- un traitement physico-chimique sur deux étages,
- un traitement des boues.

Par ailleurs, le choix des différents composants permet le greffage de dispositifs de traitements complémentaires pour améliorer la qualité des floculations chimiques ou de solidification des déchets et boues ou de désinfection.

Cette unité mobile est spécialement conçue pour traiter les eaux chargées de matières organiques et minérales, possèdant une DCO jusqu'à 25 000 mg/l et une MES jusqu'à 3 g/l.

Selon les caractéristiques des effluents, le débit d'entrée dans l'installation est de 5 à 25 $m^3$ par heure, permettant un abaissement de la DCO entre 95 et 99,8 %, un retrait des graisses entre 60 et 120 g/l, le débit des boues liquides à concentrer étant équivalent à une récupération de 80 à 100 Kg de matière sèche par heure et les matières sortant de la centrifugeuse pouvant atteindre une siccité de 25 %. Ces effluents chargés seront collectés et stockés :

- dans des bassins naturels ou artificiels, ou
- dans des bâches de stockage adaptées.

En ce qui concerne l'élimination des matières, cette unité peut traiter les matières grasses, les boues liquides et les matières de curage d'égoûts et de fosses de vidange.

D'autres effluents peuvent également être traités par cette unité et en particulier les eaux superficielles de ruissellement, les eaux des rivières, les eaux d'étangs et de mares et les cours d'eau pollués accidentellement.

4

Cette unité est transportable sur deux semi-remorques la première comprenant les composants définis précédemment, et la seconde comprenant les armoires électriques de commande, les organes de contrôle, d'asservissement et les automatismes, ainsi que les accessoires nécessaires au fonctionnement de l'unité, tels que conduites de liaisons, groupes électrogènes, compresseurs d'air, aéro-éjecteurs de relevage des effluents, matériels de laboratoires, etc...

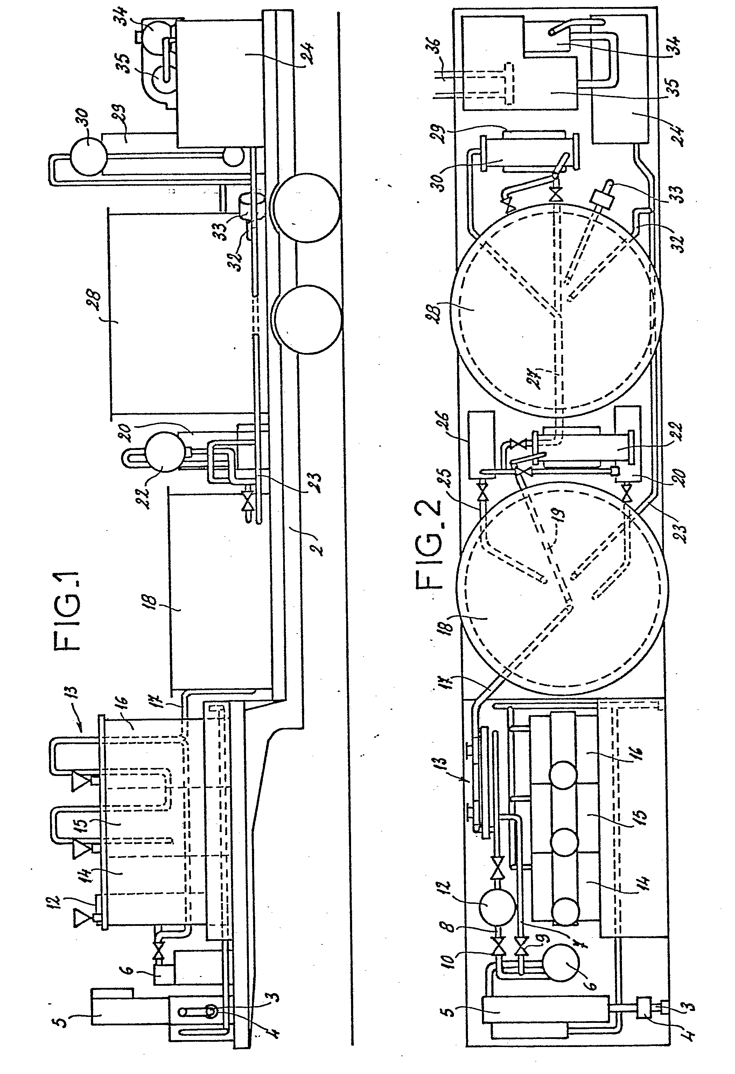

De toute façon, l'invention sera bien comprise à l'aide de la description qui suit, en référence au dessin schématique annexé représentant, à titre d'exemple non limitatif, une forme d'exécution de cette unité représentée en vue de côté à la figure 1 et en vue de dessus à la figure 2.

Comme représenté à la figure 1, cette unité est montée sur une semi-remorque (2) satisfaisant à la réglementation routière, c'est-à-dire ayant une largeur hors-tout inférieure à 2,50 m.

A l'extrémité avant de la remorque est disposé le conduit (3) d'entrée de l'effluent sur lequel est monté un débitmètre (4). En aval de ce débitmètre est disposé un dispositif de filtration (5) réalisant, dans un premier temps, la retenue des particules solides supérieures à 500 microns, puis un tamisage fin des eaux avec retenue des particules d'un diamètre supérieur à 150 microns. En amont du filtre est disposée une pompe (6) de circulation de l'effluent dont la sortie débouche dans deux conduites, respectivement (7) et (8), disposées en parallèle, et pouvant être isolées par des vannes (9, 10). Sur la conduite (8) est disposé un système de dégraissage (12). De ce fait, l'opérateur ne fera passer l'effluent à traiter dans le dispositif (12) que si l'effluent contient des graisses.

A la sortie des conduites (7, 8), est disposé un floculateur (13) du type à échangeurs tubulaires munis de venturis auxquels sont associés trois compartiments (14, 15 et 16) destinés au stockage et à la distribution des produits devant réagir avec l'effluent pour réaliser la coagulation de certains des composants de celui-ci.

Chaque compartiment (14, 15, 16) comprend un réservoir de produit, un système de dilution du produit, un agitateur, et une pompe doseuse d'injection du produit dans le conduit de circulation de l'effluent.

En sortie du floculateur (13) l'effluent est amené par une conduite (17) à l'intérieur d'un bac de flottation (18). A l'intérieur de ce bac est injecté, en partie centrale par un conduit (19), de l'air dissout en micro-bulles à l'aide d'une pompe (20) et d'un tube (22) de pressurisation. Les boues récupérées dans le bac de flottation sont évacuées par une tubulure (23) vers un réservoir (24) disposé à l'extrémité arrière de la remorque.

La partie liquide de l'effluent se trouvant dans le bac de flottation est évacuée de celui-ci par une conduite (25) puis, après reprise par une pompe de transfert (26), introduite par une conduite (27) à l'intérieur d'un second bac de flottation (28). Ce bac de flottation (28) est alimenté en micro-bulles d'air dissoutes par une pompe (29) et un tube (30) de pressurisation.

Les boues récupérées dans le bac de flottation (28) sont évacuées par une tubulure (32) vers le réservoir (24). Pour sa part, après filtration dans le fond du bac, l'eau résiduaire est évacuée par une tubulure (33). Après contrôle des différentes caractéristiques de cette eau, celle-ci peut être rejetée dans le milieu naturel sans risque de pollution.

Au-dessus du réservoir (24) est disposée une pompe (34) assurant le tranfert des boues vers une centrifugeuse (35) permettant l'extraction d'une partie de l'eau contenue dans les boues. Les boues déshydratées sont extraites de la centrifugeuse par une vis d'extraction (36).

Le dessin ne représente pas un certain nombre d'organes de mesure telle que mesure du pH, de la viscosité, etc... qui équipent cette installation.

Comme il ressort de ce qui précède, l'invention apporte une grande amélioration à la technique existante en

6

fournissant une unité mobile et par conséquent susceptible d'être déplacée d'un site de décharge en un autre, ou en cas de pollution locale d'être amenée sur les lieux mêmes de l'incident, afin de permettre un traitement efficace des effluents pollués, en raison notamment de sa capacité d'adaptation à différents types de traitements partiels ou pouvant se cumuler, en fonction des caractéristiques de l'effluent à traiter.

- <u>REVENDICATIONS</u> -

1. - Unité mobile d'épuration d'eaux et de boues polluées, caractérisée en ce qu'elle comprend, montés sur une remorque, d'amont en aval dans le sens de circulation de l'effluent à traiter : un dispositif de filtration (5), un dispositif de floculation (13), au moins un bac de flottation (18), un réservoir (24) de récupération des boues de flottation et un dispositif (35) de déshydratation des boues de flottation.

2. - Unité selon la revendication 1, caractérisée en ce que le dispositif de filtration comprend des premiers moyens pour retenir les particules solides d'un diamètre supérieur à 500 microns, et d'autres moyens pour réaliser un tamisage fin des eaux avec retenue des particules d'un diamètre supérieur à 150 microns.

3. - Unité selon l'une quelconque des revendications 1 et 2, caractérisée en ce qu'entre le dispositif de filtration (5) et le dispositif de floculation (13) sont disposées en parallèle une conduite de passage direct (7) de l'effluent et une conduite (8) comprenant un dispositif (12) de séparation des graisses.

4. - Unité selon l'une quelconque des revendications 1 à 3, caractérisée en ce que le dispositif de floculation (13) est du type à échangeurs tubulaires munis de venturis, et comprend trois compartiments (14, 15, 16) destinés chacun à l'amenée d'un produit, chaque compartiment comprenant lui-même un réservoir de produit, un système de dilution, un agitateur, et une pompe doseuse réalisant l'injection du produit considéré dans le conduit de circulation de l'effluent.

5. - Unité selon l'une quelconques des revendications 1 à 4, caractérisée en ce qu'en aval du dispositif de flottation (18) est disposé un second bac de flottation (28) dans lequel est amené l'effluent liquide en provenance du premier bac, en vue de la récupération des particules coagulées non récupérées dans le premier bac.

6. - Unité selon l'une quelconque des revendications 1 à 5, caractérisée en ce que le dispositif de déshydratation des boues comprend une pompe (34) amenant les boues prélevées dans le réservoir (24) à une centrifugeuse (35) de laquelle les boues séchées sont extraites par une vis sans fin (36).

FIG.1

FIG.2

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | GB-A-2 007 637  (R. REICHLING & CIE.) <br> * En entier * | 1-6 | C 02 F    9/00 <br> C 02 F    1/24 |
| Y | GB-A-2 004 859  (A. STIGEBRANDT) <br> * En entier * | 1-6 | |
| Y | DE-A-2 206 735  (H. KUSCHE) <br> * En entier * | 1-6 | |
| Y | DE-A-2 525 766  (GELSENBERG MANNESMANN) <br> * En entier * | 1-6 | |
| A | US-A-3 701 426  (R.D. WETZEL) <br> * En entier * | 1-6 | |
| A | US-A-4 193 869  (M. BRUCKER et al.) <br> * En entier * | 1-6 | |

DOMAINES TECHNIQUES RECHERCHES (Int. Cl.4)

C 02 F

Le présent rapport de recherche a été établi pour toutes les revendications

| Lieu de la recherche | Date d'achèvement de la recherche | Examinateur |
|---|---|---|
| LA HAYE | 06-09-1985 | VAN AKOLEYEN H.T.M. |